# EUROPÄISCHE PATENTANMELDUNG

(11) **EP 1 118 448 A2**
(43) Veröffentlichungstag der Anmeldung: **25.07.2001**
(21) Anmeldenummer: 00122496.3
(22) Anmeldetag: 14.10.2000
(51) Int. Cl.: B29C 47/38, B29C 47/50, B29C 47/68, B29C 47/84

(54) **Vorrichtung zum Fördern von elastomeren Medien, Verwendung der Vorrichtung sowie zwei Betriebsverfahren**

(30) Priorität: 19.01.2000 EP 00100984
(71) Anmelder: Maag Pump Systems Textron AG, 8023 Zürich (CH)
(72) Erfinder: Giesler, Jörg, 8049 Zürich (CH); Sonder, Hans, 8636 Wald (CH); Holzer, Heinrich, 8172 Niederglatt (CH); Wagner, Hans-Dieter, 79805 Eggingen (DE); Brinken, Frank, 6343 Rotkreuz (CH); Heinen, Michael, 8049 Zürich (CH)
(74) Vertreter: Troesch Scheidegger Werner AG

(57) **Zusammenfassung**

Die Erfindung betrifft eine Vorrichtung zum Fördern von elastomeren Medien, wobei die Vorrichtung aus einer Zahnradpumpe (1), einem Filter (20) und einem Schneckenextruder (10) besteht, der in Förderrichtung (6) des Fördermediums gesehen vor der Zahnradpumpe (1) angeordnet ist und der aus einer Schnecke (11) und einem Schneckengehäuse (12) besteht. Erfindungsgemäss ist das Filter (20) nach der Zahnradpumpe (1) angeordnet. Dadurch wird erreicht, dass die ins Fördermedium eingebrachte Energie reduziert wird, womit die Gesamtleistung der Vorrichtung erhöht werden kann.

## Beschreibung

Die vorliegende Erfindung betrifft eine Vorrichtung nach dem Oberbegriff des Patentanspruchs 1, eine Verwendung der Vorrichtung sowie zwei Betriebsverfahren.

Zahnradpumpen werden insbesondere dann eingesetzt, wenn ein Fördermedium mit konstantem Durchsatz bei vergleichsweise hohem Druck gefördert werden soll. Insbesondere eignen sich Zahnradpumpen zur Förderung von hochviskosen Medien, mitunter auch von Elastomeren. So wurden in der Kautschukindustrie bereits Zahnradpumpen zum Fördern von Kautschukmischungen eingesetzt.

Bei Verwendung einer Zahnradpumpe zur Förderung von elastomeren Medien besteht die technologische Anforderung insbesondere darin, die Zahnlücken der Zahnräder vollständig zu füllen, um einen konstanten Durchsatz zu erreichen. Um die Zahnlücken möglichst vollständig füllen zu können, wurde bereits vorgeschlagen, eine Zuführvorrichtung in Förderrichtung des Fördermediums gesehen vor der Zahnradpumpe anzuordnen.

So ist zunächst auf die Lehre gemäss CH-A5-621 515 zu verweisen, die ein Aggregat mit beabstandeten Einzugswalzen zur Erzeugung eines Fülldruckes vor der Zahnradpumpe beschreibt. Es hat sich gezeigt, dass diese bekannte, auch etwa als "Torque Feeder" bezeichnete Zuführvorrichtung die Zahnradpumpe bzw. die Zahnlücken der Zahnräder ungenügend füllen.

Des weiteren sind aus der EP-A2-0 508 080, der EP-A2-0 508 079 und aus der US-5 156 781 Vorrichtungen bekannt, bei denen eine auch etwa als Extruder bezeichnete Schnecke als Füttervorrichtung vor einer Zahnradpumpe angeordnet ist. Mit dem Extruder wird zwar eine gute Füllung der Zahnlücken der Zahnräder erreicht, allerdings wird oft zuviel und auf unkontrollierbare Weise Friktionsenergie in das Fördermedium eingebracht, womit die Gefahr des Anvernetzens - insbesondere bei der Kautschukverarbeitung - heraufbeschworen wird.

Die in US-5 156 781 offenbarte Lehre unterscheidet sich von den in den genannten europäischen Offenlegungsschriften dadurch, dass bei der erstgenannten zwischen dem Extruder und der Zahnradpumpe ein Filter vorgesehen ist. Hierdurch ist der Fliessweg für das Fördermedium bedeutend grösser, womit zusätzlich Energie in das Fördermedium eingebracht werden muss, da je nach dem Verschmutzungsgrad des Filters ein gewisser, über dem Filter entstehender zusätzlicher Druckabfall überwunden werden muss.

Des weiteren wird auf die deutsche Offenlegungsschrift mit der Nummer DE-1 579 001 verwiesen, in der ein Schneckenextruder offenbart ist, welcher zur Aussteuerung von Druckschwankungen im Fördermedium eine sich stetig verjüngende Schneckengehäuseinnenwand in Richtung des Austrittsendes aufweist. Dementsprechend ist die Umhüllende des Schneckenkörpers ausgebildet. Die Aussteuerungen von auftretenden Druckschwankungen erfolgt durch axiales Verschieben des Schneckenkörpers im Schneckengehäuse, womit der Rückfluss von Fördermedium in Abhängigkeit der Stellung des Schneckenkörpers im Schneckengehäuse erhöht resp. reduziert wird. Wie bei den vorstehend erwähnten bekannten Lehren erfolgt das Einbringen von Friktionsenergie in das Fördermedium auf unkontrollierte Weise, womit auch bei dieser bekannten Lehre mit den erwähnten Nachteilen zu rechnen ist.

Der vorliegenden Erfindung liegt daher die Aufgabe zugrunde, eine Vorrichtung anzugeben, bei der die vorstehend genannten Probleme vermieden werden.

Diese Aufgabe wird durch die im kennzeichnenden Teil des Patentanspruchs 1 angegebenen Massnahmen gelöst. Vorteilhafte Ausgestaltungen der Erfindung, eine Verwendung sowie zwei Betriebsverfahren sind in weiteren Ansprüchen angegeben.

Die Erfindung weist die folgenden Vorteile auf: Indem das Filter nach der Zahnradpumpe angeordnet ist, kann die Gefahr des Anvernetzens des Fördermediums erfolgreich verhindert, zumindest aber erheblich reduziert werden. Dies wird durch den verkürzten Fliessweg für das Fördermedium möglich, womit weniger Friktionsenergie in das Fördermedium eingebracht wird. Als Folge davon reicht ein geringerer Fülldruck aus, welcher durch den Schneckenextruder erzeugt werden muss. Mit anderen Worten kann bei konstantem Wert für die eingebrachte Friktionsenergie nunmehr der Durchsatz mit Hilfe der Erfindung gegenüber der bekannten Anordnung erhöht werden.

Die Erfindung wird nachfolgend anhand von Zeichnungen beispielsweise näher erläutert. Dabei zeigen
- Fig. 1: eine erfindungsgemässe Vorrichtung, bestehend aus einer Zahnradpumpe und einem in Serie geschalteten Schneckenextruder,
- Fig. 2: eine weitere Ausführungsform der erfindungsgemässen Vorrichtung und
- Fig. 3: einen Schneckenextruder mit einer Temperiereinheit.

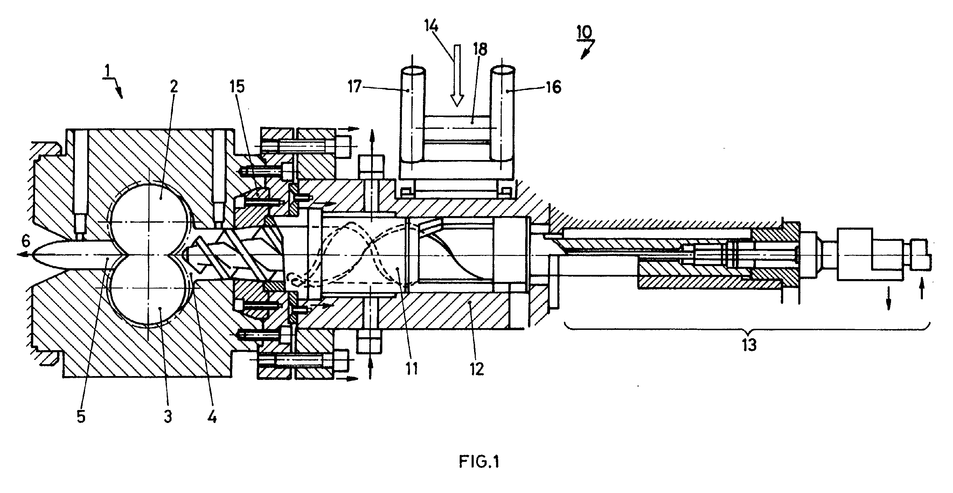

In Fig. 1 ist eine erfindungsgemässe Vorrichtung, bestehend aus einer Zahnradpumpe 1 und einem Schneckenextruder 10, dargestellt, wobei die Zahnradpumpe 1 in Förderrichtung 6 eines Fördermediums gesehen nach dem Schneckenextruder 10 angeordnet ist. Der Schneckenextruder 10 besteht aus einer Schnecke 11, die in einer bevorzugten Ausführungsform doppelhelixartig aufgebaut ist, und einem Schneckengehäuse 12, das über verschiedene Verbindungsmittel an das Pumpengehäuse der Zahnradpumpe 1 angeflanscht ist, wobei die Schnecke 11 vorzugsweise in das Pumpengehäuse hineinragt.

Erfindungsgemäss weist die Schnecke 11 an deren zahnradpumpenseitigen Ende eine Verjüngung auf. Entsprechend ist in diesem Bereich ein Konus 15 als separater oder als integrierter Bestandteil des Schneckengehäuses 12 vorgesehen. Des weiteren besteht der Schneckenextruder 10 aus einer Justiereinheit 13, welche im wesentlichen auf der Achse der Schnecke 11 - jedoch bezüglich der Zahnradpumpe 1 am gegenüberliegenden Ende - angeordnet ist.

Das Schneckengehäuse 12 - und entsprechend die umhüllende der Schnecke 11 - weist in einer bevorzugten Ausführungsform einen zylindrischen und einen konischen Teil auf, wobei diese Teile aus einem oder mehreren Werkstücken gefertigt sein können. Denkbar ist auch, dass das ganze Schneckengehäuse 12 - und damit wiederum die Umhüllende der ganzen Schnecke 11 - konisch verlaufen. In einer bevorzugten Ausführungsform beträgt das Verhältnis vom konischen Teil zum zylindrischen Teil zwischen 1:2 bis 1:5, vorzugsweise ca. 1:4.

Mit Hilfe der Justiereinheit 13 kann die Schnecke 11 relativ zur Zahnradpumpe 1 in Axialrichtung verschoben werden. Durch die Verjüngung der Schnecke 11 und die konische Ausgestaltung des entsprechenden Teils des Schneckengehäuses 12 kann somit die Spaltgrösse zwischen Schneckenrand und Schneckengehäuse 12 im Bereich der Verjüngung bzw. des Konus 15 eingestellt werden. Damit wird es ermöglicht, die beim Fördervorgang im Schneckenextruder 10 durch Reibung in das Fördermedium eingebrachte Energie zu kontrollieren bzw. zu steuern. Damit ist die Gefahr des Anvernetzens des Fördermediums vermeidbar, zumindest aber stark reduzierbar.

Das in Streifenform vorliegende Fördermedium wird über Walzen 16, 17 und 18 in den Schneckenextruder 10 eingeführt (Pfeil 14) und von der Schnecke 11 erfasst. Der Transport des Fördermediums erfolgt nun in Axialrichtung der Schnecke 11 zur Zahnradpumpe 1, in der das Fördermedium von der Saugseite 4 auf die Druckseite 5 befördert wird. Die Hauptförderrichtung ist in Fig. 1 mit 6 gekennzeichnet.

In einer bevorzugten Ausführungsform der Erfindung beträgt die Länge der Schnecke 11 weniger als das Fünffache, vorzugsweise weniger als das Dreifache des Durchmessers der Schnecke 11. Diese kurzen Ausführungsformen für den Schneckenextruder 10 sind durch die konische Ausbildung bzw. die Verjüngung und die erwähnte axiale Verschiebung der Schnecke 11 möglich. Als Resultat ergibt sich eine reduzierte und kontrollierte Abgabe von Reibungsenergie an das Fördermedium. Bei langen Schneckenextrudern gemäss dem Stand der Technik - d.h. bei Schnecken, deren Länge mehr als das Zehnfache des Durchmessers beträgt - ist die ins Fördermedium eingebrachte Friktionsenergie erheblich höher, wobei die Höhe der eingebrachten Energie darüber hinaus nicht kontrollierbar ist.

Der erfindungsgemässe Schneckenextruder 10 ermöglicht die Trennung der Verfahrensschritte Plastifizieren und Druckaufbau, indem der Schneckenextruder 10 nicht zum Druckaufbau sondern einzig für das Plastifizieren vorgesehen ist. Für den Druckaufbau wird die hierfür äusserst geeignete Zahnradpumpe 1 eingesetzt, wobei in einer bevorzugten Ausführungsform vorgesehen ist, dass der Schneckenextruder 10 unmittelbar an die Zahnradpumpe 1 angeordnet ist, so dass - weiterhin bevorzugt - die Schnecke 11 in das Pumpengehäuse der Zahnradpumpe 1 - gegebenenfalls bis unmittelbar vor die Zahnräder - hineinragt. Daher sind unter dem Begriff "Schneckengehäuse" durchaus auch Teile des Pumpengehäuses der Zahnradpumpe 1 zu verstehen, nimmt doch dieses ebenso die Schnecke 11 des Schneckenextruders 10 auf.

Bei einer bevorzugten Ausführungsform der Erfindung ist vorgesehen, den Schneckenextruder 10 derart auszubilden, dass eine Tangentialebene an die Schnecke 11 im Bereich der Verjüngung einen Winkel von 2 bis 10°, vorzugsweise 8°, mit der Mittelachse der Schnecke 11 einschliesst.

In Fig. 1 ist eine einzelne Verjüngung und ein einzelner Konus dargestellt. Denkbar ist auch, dass mehrere, hintereinander angeordnete Verjüngungen bzw. Konen vorgesehen sind. Hierdurch wird das Prinzip der Erfindung nicht verlassen.

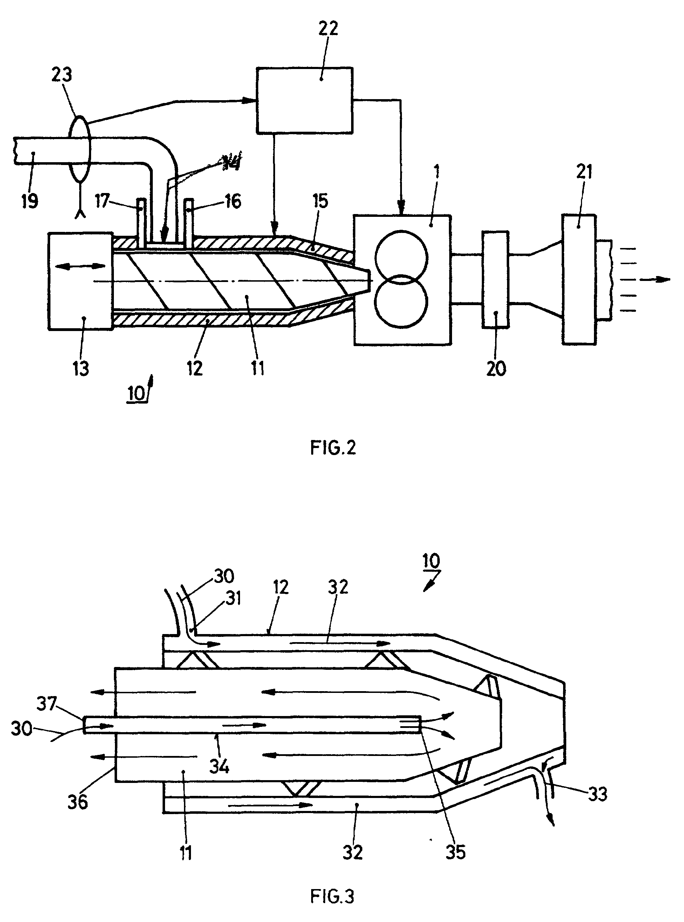

Fig. 2 zeigt, in schematischer Darstellung, eine weitere Ausführungsform der erfindungsgemässen Vorrichtung. Neben den bereits anhand Fig. 1 erläuterten Bestandteilen der erfindungsgemässen Vorrichtung - wie Zahnradpumpe 1, Schneckenextruder 10 und Justiereinheit 13 inkl. deren Bestandteilen - sind mit 20 bis 23 ein Filter, ein Spritzkopf, eine Steuereinheit und ein Metalldetektor bezeichnet.

Gemäss der US-5 156 781 ist es bekannt, das Fördermedium vor der Verarbeitung, d.h. vor dem Spritzkopf, zu filtern, damit keine Verunreinigungen in das Endprodukt gelangen können bzw. der Spritzkopf nicht beschädigt wird resp. dessen Öffnungen nicht verstopft werden. Damit allfällige im Fördermedium enthaltene Metallpartikel die Zahnradpumpe nicht beschädigen können, wurde durchwegs vorgeschlagen, den Filter zwischen dem Schneckenextruder und der Zahnradpumpe anzuordnen. Dies hat jedoch den Nachteil, dass der Fülldruck vor der Zahnradpumpe reduziert wird, und zwar umso mehr, je stärker die Verschmutzung des Filters ist. Als Gegenmassnahme musste die Leistung des Schneckenextruders erhöht werden, um den Druckabfall über dem Filter zu kompensieren. Als Folge davon sind die bekannten, bereits in der Einleitung aufgezählten Nachteile betreffend der unkontrollierten Energieeinbringung in das Fördermedium in Kauf zu nehmen.

Zur Vermeidung dieser Nachteile wird vorgeschlagen, den Filter 20 nach der Zahnradpumpe 1 anzuordnen. Damit wird ein deutlich kürzerer Fliessweg für das Fördermedium erhalten, was insbesondere bei der Förderung von Kautschuk von grösster Bedeutung ist, denn dadurch wird der durch den Schneckenextruder 10 aufzubauende Druck zum Füllen der Zahnlücken bei der Zahnradpumpe 1 minimal, womit gleichzeitig die Einbringung von Energie in das Fördermedium bei einem bestimmten Durchsatz minimal ist. Mit anderen Worten kann mit Hilfe der erfindungsgemässen Anordnung der Durchsatz gegenüber der bekannten Lehre - bei gleichbleibender Energieeinbringung - erhöht werden, was sich fertigungstechnisch in einer höheren Produktivität auswirkt. Dies ist nicht zuletzt in der Reifenindustrie von erheblicher wirtschaftlicher Bedeutung.

Mit der eben beschriebenen Anordnung - bestehend aus Schneckenextruder, Zahnradpumpe 1 und Filter 20 - werden bereits erheblich bessere Resultate erreicht, auch wenn ein an sich bekannter Schneckenextruder verwendet wird. Deutlich bessere Resultate werden bei der Verwendung eines Schneckenextruders 10 gemäss Fig. 1 erhalten, weshalb dies die bevorzugte Ausführungsform darstellt.

Die erfindungsgemässe Anordnung ermöglichst es darüber hinaus, die Schnecke 11 in den Pumpeneinlauf der Zahnradpumpe 1 hineinragen zu lassen. Damit kann der Fliessweg des Fördermediums weiter verkürzt werden.

Muss damit gerechnet werden, dass im Fördermedium Metallteile als Verunreinigungen enthalten sind, so wird des weiteren vorgeschlagen, einen Metalldetektor 23 vor der Zahnradpumpe 1 vorzusehen, mit Hilfe dessen allfällig im Rohmaterial enthaltene Metallteile detektiert werden können. Damit beim Detektieren eines Metallteils das Austragungssystem vor einem Schaden bewahrt werden kann, ist die Steuereinheit 22 vorgesehen, welche einerseits mit dem Metalldetektor 23 anderseits mit dem Antrieben der Zahnradpumpe 1 und der Schnecke 11 verbunden ist. Sobald ein Metallteil vom Metalldetektor 23 erkannt wird, erfolgt eine entsprechende Signalisierung an die Steuereinheit 22, welche ihrerseits entsprechende Aktionen auslöst, d.h. insbesondere die Antriebe der Zahnradpumpe 1 und der Schnecke 11 anzuhalten, bevor das detektierte Metallteil von den Zahnrädern der Zahnradpumpe 1 erfasst wird.

In der in Fig. 2 gezeigten bevorzugten Ausführungsform ist der Metalldetektor 23 in Förderrichtung des Fördermediums gesehen vor der Öffnung 14 angeordnet. Damit kann erreicht werden, dass ein detektiertes Metallteil auch von der Schnecke 11 nicht erfasst werden kann, wenn die Steuereinheit 22 die Antriebe der Zahnradpumpe 1 und der Schnecke 11 rechtzeitig abschaltet. Wird der Metalldetektor 23 in genügender Entfernung vor der Öffnung 14 angeordnet, so besteht die Möglichkeit, dass eine Bedienperson ein detektiertes Metallteil aus dem Rohmaterial entfernt. Damit kann gegebenenfalls auf ein Abschalten der Antriebe der Zahnradpumpe 1 und der Schnecke 11 verzichtet werden, womit ein Dauerbetrieb, welcher bei der Produktionsoptimierung von entscheidender Bedeutung ist, gewährleistet werden kann.

Besteht das Rohmaterial aus einem Streifen, so ist vorgesehen, dass beim Detektieren eines Metallteils die Bedienperson den Streifenabschnitt, in dem sich das detektierte Metallteil befindet, abschneidet, wobei die beiden Schnittstellen vor dem Erreichen der Öffnung 14 wiederum zusammengefügt werden. Während dieses Vorganges wird die Förderung nicht unterbrochen. Voraussetzung für diese Handhabung ist, dass sich der Metalldetektor 23 in hinreichend grosser Distanz vor der Öffnung 14 befindet.

Fig. 3 zeigt einen Schneckenextruder 10, der mit einer Temperiereinheit (in Fig. 3 nicht dargestellt) zum Einstellen bzw. Halten einer vorgebbaren idealen Temperatur für ein im Schneckenextruder enthaltenes Fördermedium verbunden ist. Die Temperiereinheit ist dabei ein Temperiermedium enthaltendes Kühl- und/oder Heizaggregat, das mit dem Schneckengehäuse 12 und/oder mit der Schnecke 11 verbunden wird, wobei die Temperiereinheit über Öffnungen 31, 33 resp. 37, 36 mit dem Schneckengehäuse 12 resp. der Schnecke 11 verbunden wird. Sowohl das Schneckengehäuse 12 als auch die Schnecke 11 sind zur Aufnahme des Temperiermediums 30 bzw. von Transportkanälen für das Temperiermedium 30 hohl ausgebildet. In diesen Hohlräumen sind je nach Bedarf Wände vorgesehen, damit das Temperiermedium 30 für eine möglichst gleichmässige Temperaturverteilung sorgt. Im Schneckengehäuse 12 sind beispielsweise spiralförmige Wände vorgesehen, welche das Temperiermedium 30 in spiralförmigen Kanälen von der Öffnung 31 zur Öffnung 33 führen. Demgegenüber ist in der Schnecke 11 ein Zuführrohr 34 vorgesehen, über das Temperiermedium 30 ins Innere der Schnecke 11 geleitet wird. Zwischen dem Zuführrohr 34 und der inneren Wand der Schnecke 11 gelangt das Temperiermedium 30 über die Öffnung 36 wiederum zur Temperiereinheit zurück.

Um eine optimale, situationsgerechte Temperatureinstellung erreichen zu können, werden verschiedene Konfigurationen vorgeschlagen. So ist bei einer Minimalvariante lediglich eine Temperiereinheit vorhanden, an die sowohl der Kreislauf durch das Schneckengehäuse 12 als auch durch die Schnecke 11 angeschlossen werden, und dies entweder in Parallel- oder Serieschaltung. Demgegenüber besteht ein maximaler Ausbau des Kühlsystems darin, dass für jeden Kühlkreislauf ein Temperiereinheiten, d.h. eine für das Schneckengehäuse 12 und eine für die Schnecke 11, bereitgestellt wird. Damit besteht die Möglichkeit, die Oberflächentemperaturen der Schnecke 11 und des Schneckengehäuses 12 unabhängig voneinander einstellen zu können.

In Weiterführung obiger Konzepte zur Temperatureinstellung ist denkbar, auch eine allenfalls zur Temperierung der Zahnradpumpe 1 vorhandene Temperiereinheit mit einzubeziehen. So besteht die Möglichkeit, die Temperatureinheit für die Zahnradpumpe ganz oder teilweise für die Einstellung der Temperatur im Schneckenextruder zu verwenden.

Es wird nochmals darauf hingewiesen, dass der Schneckenextruder 10 in der Art eines Stiftextruders, eines konventionellen Extruders oder als ein mit Streifen gefütterte Extruder sein kann. Betreffend der verschiedenen Ausführungsvarianten wird auf die US-5 156 781 verwiesen.

Das Filter 20 ist von bekannter Bauweise, wobei denkbar ist, dass es manuell oder automatisch auswechselbar ist.

## Patentansprüche

1. Vorrichtung, bestehend aus einer Zahnradpumpe (1), einem Filter (20) und einem Schneckenextruder (10), der aus einer Schnecke (11) und einem Schneckengehäuse (12) besteht, zum Fördern von elastomeren Medien, insbesondere von Kautschuk, wobei der Schneckenextruder (10) in Förderrichtung (6) des Fördermediums gesehen vor der Zahnradpumpe (1) angeordnet ist, dadurch gekennzeichnet, dass das Filter (20) nach der Zahnradpumpe (1) angeordnet ist.

2. Vorrichtung nach Anspruch 1, dadurch gekennzeichnet, dass ein Metalldetektor (23) vor der Zahnradpumpe (1), vorzugsweise vor dem Schneckenextruder (10) angeordnet ist und dass eine Steuereinheit (22) vorgesehen ist, welche mit Antrieben der Schnecke (11) und der Zahnradpumpe (1) und mit dem Metalldetektor (23) wirkverbunden ist.

3. Vorrichtung nach Anspruch 1 oder 2, dadurch gekennzeichnet, dass die Schnecke (11) in das Gehäuse der Zahnradpumpe (1) hineinragt.

4. Vorrichtung nach einem der Ansprüche 1 bis 3, dadurch gekennzeichnet, dass das Filter (20) zwischen Zahnradpumpe (1) und Spritzkopf (21) angeordnet ist.

5. Vorrichtung nach einem der Ansprüche 1 bis 4, dadurch gekennzeichnet, da das Schneckengehäuse (12) mindestens einen konischen Teil (15) und die Schnecke (11) im Bereich des konischen Teils (15) mindestens eine Verjüngung aufweist und dass zur kontrollierten Zuführung von Energie in das Fördermedium die Schnecke (11) im Schneckengehäuse (12) axial verschiebbar ist.

6. Vorrichtung nach Anspruch 5, dadurch gekennzeichnet, dass sowohl die Verjüngung der Schnecke (11) als auch der konische Teil (15) am zahnradpumpenseitigen Ende des Schneckenextruders (10) vorgesehen sind.

7. Vorrichtung nach Anspruch 5 oder 6, dadurch gekennzeichnet, dass die Verjüngung der Schnecke (11) in Förderrichtung (6) des Mediums gesehen zunimmt.

8. Vorrichtung nach einem der Ansprüche 5 bis 7, dadurch gekennzeichnet, dass die Schnecke (11) doppelhelixartig aufgebaut ist.

9. Vorrichtung nach einem der Ansprüche 5 bis 8, dadurch gekennzeichnet, dass eine Tangentialebene an die Schnecke (11) im Bereich der Verjüngung einen Winkel von 2 bis 10°, vorzugsweise 8°, mit der Mittelachse der Schnecke (11) einschliesst.

10. Vorrichtung nach einem der Ansprüche 5 bis 9, dadurch gekennzeichnet, dass die Länge der Schnecke (11) kleiner als das Fünffache, vorzugsweise das Dreifache, des Durchmessers der Schnecke (11) beträgt.

11. Vorrichtung nach einem der Ansprüche 5 bis 10, dadurch gekennzeichnet, dass der Schneckenextruder (10) neben dem konischen Teil (15) einen zylindrischen Teil aufweist.

12. Vorrichtung nach Anspruch 11, dadurch gekennzeichnet, dass das Verhältnis der Länge des konischen Teils (15) zur Länge des zylindrischen Teils zwischen 1:2 bis 1:5, vorzugsweise bei ca. 1:4, liegt.

13. Vorrichtung nach einem der Ansprüche 5 bis 12, dadurch gekennzeichnet, dass die Länge des Konus (15) kleiner ist als der Durchmesser der Schnecke (11).

14. Vorrichtung nach einem der vorangehenden Ansprüche, dadurch gekennzeichnet, dass die Schnecke (11) und/oder das Schneckengehäuse (12) mindesten je einen Hohlraum mit mindestens zwei Öffnungen (31, 33; 35, 36) zum Ein- resp. Ablassen eines Temperiermediums (3) aufweisen.

15. Verwendung der Vorrichtung nach einem der Ansprüche 1 bis 14 zur Förderung von elastomeren Medien, insbesondere von Kautschuk.

16. Verfahren zum Betrieb der Vorrichtung nach einem der Ansprüche 2 bis 14, dadurch gekennzeichnet, dass bei Detektion eines Metallteils die Förderung von Fördermedium unterbrochen wird, indem die Antriebe der Schnecke (11) und der Zahnradpumpe (1) gestoppt werden.

17. Verfahren zum Betrieb der Vorrichtung nach einem der Ansprüche 2 bis 14, dadurch gekennzeichnet, dass eine Detektion eines Metallteils einer Bedienperson angezeigt wird, welche zur Entfernung des Metallteils in den Transportprozess des Fördermediums eingreift, ohne dass der Produktionsprozess unterbrochen werden muss.
